# EUROPEAN PATENT APPLICATION

(11) **EP 3 560 700 A1**
(43) Date of publication of application: **30.10.2019**
(21) Application number: 16924374.8
(22) Date of filing: 20.12.2016
(51) Int. Cl.: B32B 15/00, B32B 17/06, C03C 17/36

(54) **LOW-EMISSIVITY COATING FOR A GLASS SUBSTRATE**

(71) Applicant: Vidrio Plano De México, S.A. De C.V., CP 66000 García, Nuevo León (MX)
(72) Inventor: CID AGUILAR, José Guadalupe, Monterrey Nuevo León 64346 (MX); CABRERA LLANOS, Roberto, Santiago Nuevo León 67324 (MX); HERNÁNDEZ CARRILLO, Rubí Aglaé, Monterrey Nuevo León 2536 (MX); TAVARES CORTEZ, José Luis, Apodaca Nuevo León 66614 (MX); JERG, Carmen, 6800 Feldkirch (AT); WEGENER, Ingo, 63755 Alzenau Alemania (DE); XU, Jia Lin, Shanghai (CN)
(74) Representative: f & e patent
(86) International application number: PCT/MX2016/000188
(87) International publication number: WO 2018/117801

(57) **Abstract**

The present invention relates to a glass substrate provided with a stack of thin coating layers formed by a first layer of anti-reflective dielectric material, with a refractive index of 1.65 to 2.65, located above the glass substrate. At least one structure of two layers formed by a first layer of an anti-reflective transparent dielectric material with a refractive index of 1.32 to 1.55, located in the bottom position, and a second layer of a metal functional layer with reflective properties in the infrared range, located in the top position, said structure being located above the first layer of anti-reflective dielectric material. A second layer of absorbent material forming an anti-corrosion barrier for protecting the metal functional layer against oxidation and corrosion. A third layer of an anti-reflective material, said layer being selected from a metal oxide with a refractive index of 1.32 to 1.55, a metal oxide with a refractive index of 1.65 to 1.95 or an aluminum-doped zinc oxide (AZO); and a fourth protective layer made of an anti-reflective material, for increasing the transmission of visible light and the scratch resistance of the substrate, having high transmission of visible light (60%), a solar transmission of less than 60%, a resistance of less than 10 per square and an emissivity of less than 0.10.

## Description

### FIELD OF INVENTION

The present invention refers to a glass provided with a low emissivity coating and solar control, with properties of electrical conductivity and thermal stability, for its application in double or triple window systems which can be annealed, semi-tempered and tempered, and targeted to the architectural market; or for laminated glazing systems for residential, architectural and automotive applications.

### BACKGROUND OF THE INVENTION

At present, architectural trends towards the use of glazed systems in facades and buildings have led to the development of windows with better thermal insulation properties, which contribute to reducing the consumption of electricity used in residential, commercial and automotive cooling and heating systems.

Glasses with low emissivity properties have the ability to provide the solar control characteristics desired by the consumer. These materials have a coating of several layers of nanometric thickness, applied on one side. Its purpose is to compensate for energy losses and/or gains due to thermal conduction in glazed systems. The operating principle varies according to the climate of the geographical region where it is installed. For cold climates, glass allows as much visible light and direct solar energy (short-wave heat) as possible to pass through, while keeping the long-wave heat, radiated by the heating system, inside the glazed space. In warm regions, on the other hand, glass allows visible light to pass through while selectively blocking the passage of solar energy and reflecting the long-wave heat radiated from sidewalks, streets, pavements, etc. to the outside.

Structurally, a low emissivity glass consists of a vitreous substrate on which one or more metallic films are deposited between dielectric layers. As described by Hoffman et al, in U.S. Patent No. 7,670,641, the metal layer provides high infrared radiation reflectivity and low absorption in the visible range. Noble metals such as Al, Ag, Au, Cu and Pt are commonly used, however silver is preferred because it gives a neutral aesthetic appearance to the coating. On the other hand, the layers of dielectric materials contribute to reducing the reflection of visible light, achieving high transparency and also help to control other properties of the coating such as: color, electrical conductivity, thermal stability and serve as a protective barrier to prevent metal oxidation. The most commonly used transparent dielectric compounds include metal oxides with a refractive index >2.0, such as: titanium, zirconium, zinc, tin and niobium oxides as well as silicon, chromium, zirconium and titanium nitrides. The choice of materials and the arrangement of the multilayer, is made taking into account the application and needs of the end consumer, maintaining a balance between the transmission of visible light, the solar factor, the coloring and the desired infrared reflection.

The basic structure of a low emissivity coating corresponds to the following configuration: glass/MeOx/Ag/barrier/MeOx; (MeOx=metallic oxide). However, some applications require the coated glass to have a more selective spectral behavior and also to be subjected to tempering and/or thermoforming treatments. In order to achieve these properties, the development of more complex coatings is resorted to, both in number of layers and in components used.

Another possibility is to use dielectric materials that enhance the optical performance and provide electrical conductivity characteristics to the coating, some of these materials are: Indium tin oxide (ITO), fluorine tine oxide (FTO), and more recently aluminum zinc oxide (AZO). The latter has aroused interest in its research because it is a material with a non-toxic character, high visible energy transmittance and low resistivity; also has an energy gap that can be controlled by the level of doping with Aluminum.

According to H. Zhou, et al.; A. Stashans, et al.; and V. Musat, et al., if during the preparation of thin AZO films, these are oriented perpendicular to the substrate surface, with a wurtzite-like polycrystalline structure, the material will exhibit transparency properties similar to ITO; with a resistivity less than 10⁻⁴ Ω-cm and 90% transmittance in the visible region. As additional advantages, it has good thermal stability and low cost processing, in contrast to ITO manufacturing.

As interest in low emitting products continues to grow, it is necessary to find solutions to the problems that matter most to manufacturers, including reducing the susceptibility of the metal film to corrosion, as well as increasing the durability and chemical stability of the coating. While the inclusion of barrier layers minimizes corrosion damage, the deposition of protective layers decreases the physical wear of the coating, even when the product is subjected to a potentially abrasive environment during the manufacturing or installation process. A Ni-Cr alloy (80:20) is used as an anti-corrosion barrier, this material has the ability to capture water vapor, oxygen, nitrogen or other compounds that may react with the metallic film. Compounds are used as protective layers: ZrO₂, ZrSiO₂, SnO₂ o TiO₂, which in addition to increasing visible light transmission and providing an anti-reflective appearance, provide excellent scratch and abrasion resistance to the entire coating.

Today a large number of low-emission products are known on the market, so it is well known that their optical properties depend to a large extent on the process used to obtain them. Today, the glass industry has increased research into materials and deposition techniques that offer products with better characteristics. The process of ionic erosion in a vacuum chamber, sputtering, is one of the most used methods for preparing low emissivity coatings. The technique consists in bombarding a cathode of the material to be deposited with particles of a partially ionized gas, which pull the atoms from the surface and project them onto the substrate. The versatility of the method allows obtaining multilayer coatings of uniform and homogeneous composition, with high mechanical stability, durability, and with better optical, thermal and solar performance properties than those achieved with other production methods.

In U.S. Patent No. 5935702 of Macquart, et al., refer to a transparent glass substrate, provided with a thin layer stack, which includes at least one metal layer with low emissivity characteristics in the infrared region, in addition contains two layers of dielectric material located above and below the metal layer, additionally a protective layer is placed at the interface formed between the functional layer and the upper dielectric layer, in order to prevent modification of the coating properties when the substrate is subjected to a heat treatment of tempering or bending. Finally, a second dielectric material is also included which acts as a barrier that blocks the oxygen diffusion between the layers. The materials used are silicon compounds such as: oxides SiO₂, SiOₓC_{y}, SiOₙN_{y}), nitrides (Si₃N₄ or AIN) and/or carbides (SiC, TiC, CrC, TaC), at least 10 nanometres thick and preferably at least 20 nanometres.

Krisko's U.S. Patent No. 6060178 refers to a heat-resistant, toughenable glass product comprising a glass substrate and a set of transparent films deposited on top of it. The coating is formed, from the glass substrate outwards, by a first anti-diffusion barrier layer, a metallic infrared reflective film, a metallic niobium barrier, up to 25 Å thick, preferably in the range of 7 to 20 Å approximately. After a metal oxide or nitride film is deposited on the niobium, causing part of it to react and form a niobium oxide or nitride interface that increases visible light transmission in the coating.

Le Masson, et al., in U.S. Patent No. 6503636, refers to a low-emissivity coating for transparent substrates, comprising at least one functional layer of silver deposited between two anti-reflective layers of zinc oxide and an additional layer of aluminum nitride, which has low internal stresses that help compensate for the compressive stresses existing in the ZnO layer.

O'Shaughnessy's US patent No.6833194 refers to an article coated with infrared reflective properties, comprising: a glass substrate; a dielectric layer of zinc stanate, with zinc content in a percentage by weight of ≥ 10% and ≤90%, and tin in a range ≤90% and ≥10% p/p; a film with electrical conductivity properties, deposited on the zinc stanate layer, which may be of: zinc oxide, tin oxide; a second film of zinc stannate, with a composition that differs at least 5%p/p from the first; a reflective infrared layer deposited on the dielectric layer; a metal barrier; a second dielectric layer, finally a protective layer consisting of at least two films containing any of the transition metals of groups 4, 5, 6, or 10, e.g. silicon oxides and/or oxy-nitrides, this last layer provides durability to the entire coating.

In U.S. Patent No. 6838159, Eby, et al. refer to a coating for a transparent substrate, which exhibits a neutral color in a wide range of light incidence angles. The coating deposited on the substrate is no more than approximately 275 Å thick and may include two layers of reflective metal, an intermediate layer of anti-reflective metal oxide and an outer layer of anti-reflective metal oxide on the second functional metal layer. Optionally, the coating of the invention can include an abrasion-resistant coating on its outermost layer. This coating consists of an abrasion resistant metal oxide, such as zinc oxide, applied at a thickness that does not affect the optical properties of the coated substrate significantly.

U.S. Patent No. 7339728, published by Harting, deals with a low emissivity coating that has high visible transmission and low solar heat gain coefficient. The coating includes three functional layers for infrared reflection, which are composed of metallic silver, separated from each other by a layer of dielectric material between 56 and 65 nm thick.

In another case, O'Shaughnessy in U.S. Patent No. 7413768, refers to a method for manufacturing an infrared reflective coated article. It is formed by a transparent vitreous substrate, a first dielectric layer of zinc stannate and a film of high electrical conductivity deposited on it. The conductive film may be tin oxide or zinc oxide. A second zinc-stannate film, an infrared reflective layer, a barrier layer over the functional layer, a second dielectric layer and a protective layer consisting of at least two films provide durability to the coated product.

US Patent No. 8440329, by Fleury et al., refers to a transparent substrate, especially glass, on which a plurality of functional layers was deposited, including at least three functional silver layers. The coating has a resistivity R <1.5Ω/sq, while the coated substrate has a selectivity ≥2. Selectivity comprises the relationship between light transmission (TL) and a solar factor (SF), defined as the sum of the direct transmission of energy from the substrate (TE) and the energy absorbed, and retransmitted, by the glass into the building.

In U.S. Patent No. 8043707 issued to Schicht et al, describes a multi-layer system for transparent substrates with low emissivity properties and resistance to heat treatment. This arrangement comprises, from the substrate, at least one anti-reflective coating consisting of several layers of ZnO, adjacent to the functional silver layer, a blocking layer, essentially metallic, located on top of silver, an anti-reflective layer consisting of several layers of ZnO or a mixed oxide with ZnMeOx composition (Me = transition metal, e.g. ZnO:Al) and a layer of Si₃N₄ o SiₓO_{y}N_{z}. Between these two layers, a layer of a metallic oxide or mixed oxide is placed, with a cubic crystalline network and 0.5 to 5 nm thick, which improves the mechanical and chemical properties of the entire multilayer system.

As can be seen, there are several developments focused on obtaining glasses with low emissivity characteristics, whose main objective is to improve the thermal insulation properties and reduce heat losses from the interior. They are usually installed as part of hermetic double units or in automotive laminated glasses, improving their thermal insulation capacity by 35%http://www.construmatica.com/construpedia/Aislamiento_T%C3%A9rmico. In addition, some applications require the product to be tempered, hardened, bent and laminated.

Based on the above, the present invention is related to the development of a low emissivity glass, composed of a glass substrate on which is deposited a multi-layer coating with low emissivity properties, resistant to thermal treatment and with low electrical resistance that facilitates the heating of its surface through the passage of an electric current, for architectural and/or automotive use. The coating consists of at least one silver film, deposited between different layers of transparent metal oxides. The coating arrangement and composition will provide a high visible light transmission (>60%), solar transmission less than 60%, resistance less than 10 Ω/sq and emissivity less than 0.10 product. In addition, the resulting products block the migration of Na⁺ from the substrate and prevent the attack of atmospheric oxygen during heating, without compromising their optical and conductivity properties after heat treatment.

Reported physical properties for these materials correspond to variables that have been calculated based on internationally accepted standards, such as light transmission, which is evaluated using the illuminant "D65" and 2° Observer standard, also known as 1931 [Publication C.I.E. 15.2, ASTM E308)]. The wavelength range used for this purpose ranges from 380 to 780 nm, integrating the values in numerical form with intervals of 10 nm. On the other hand, solar energy transmission represents the heat that stops through the glass directly, for its evaluation the region between 300 and 2500 nm is taken, with 5, 10, 50 nm intervals, and the numerical form of calculation uses as recognized standard ISO 9050 v2003, Table 2.

Ultraviolet radiation (UV) transmission calculation involves only the participation of solar UV radiation, so it is evaluated in the range of 300 nm to 380 nm in intervals of 5 nm, the numerical form of calculation uses as recognized standard IS09050 v2003, Table 3.

The infrared radiation (IR) transmission calculation involves only the near infrared region, so it is evaluated in the range of 780 to 2500 nm in intervals of 20 and 50 nm, the numerical form of calculation uses as recognized standard IS09050 v2003, Table 2.

The amount of solar heat transmitted through glass, can also be calculated by the contribution of thermal energy with which it participates in each of the regions where the solar spectrum has influence, which is from the ultraviolet region (280 nm) to the Near Infrared region (2500 nm), which is 3 % for UV, 44% for visible and 53% for IR, however, the values of direct solar energy transmission, in the present invention, are calculated on the basis of a numerical integration taking into account the whole range of solar spectrum from 300 to 2500 nm, with 50 nm intervals and using solar radiation values reported by the standard ISO 9050 v2003, Table 3.

The L*, a* and b* Illuminant "D65" color variables of the CIELAB 1976 color system are calculated from the Tristimulus values (X, Y, Z) that have been adopted by the International Commission on Illumination (C.I.E.), as a direct result of experiments involving many observers (ASTM E 308 and Colorimetry, publication CIE No 15.2). The color determination is within the visible range of 380 to 780 nm.

### OBJECTIVES OF THE INVENTION

An objective of the present invention is to provide a glass product with low emissivity characteristics, including a transparent substrate (glass), coated on one side with a low emissivity multilayer heterostructure, which improves its electrical conductivity and thermal stability.

Depending on the nature of the materials, the coated glasses may exhibit visible light transmission >60%, solar transmission <60%, electrical resistance <10 Ω/sq and emissivity <0.10. The products obtained are resistant to the migration of Na⁺ from the substrate and to the attack of atmospheric oxygen during heating. They can also be thermally treated, maintaining and even improving their optical and electrical conductivity properties, compared to untreated products.

These and other objectives and advantages of the present invention will be evident to experts in the field of the following detailed description.

### BRIEF DESCRIPTION OF THE FIGURES.

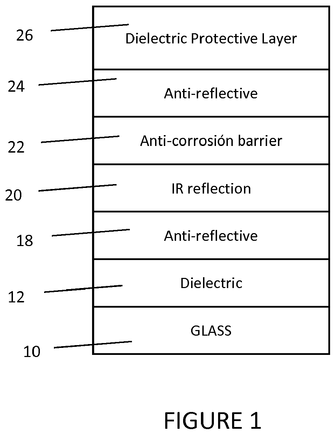

Figure 1 shows the schematic diagram of a coating that includes a structure formed by a first layer of an anti-reflective transparent dielectric material and a second layer of a functional metallic film with reflection properties in the infrared range, according to an embodiment of the present invention;

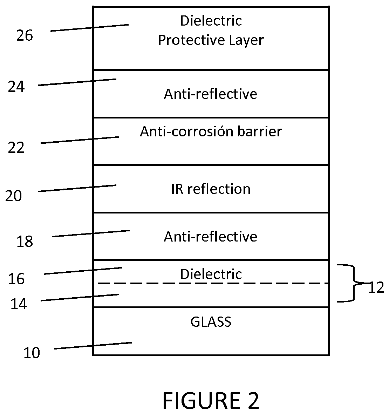

Figure 2 shows the schematic diagram of a coating that includes a structure formed by a first layer of an anti-reflective transparent dielectric material and a second layer of a functional metallic film with reflection properties in the infrared range, according to a second embodiment of the present invention;

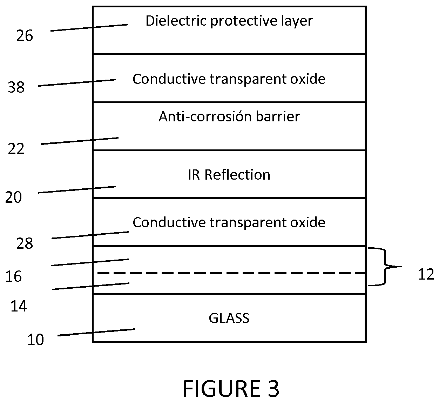

Figure 3 shows the schematic diagram of a coating that includes a structure formed by a first layer of an anti-reflective transparent dielectric material and a second layer of a functional metallic film with reflection properties in the infrared range, according to a third embodiment of the present invention;

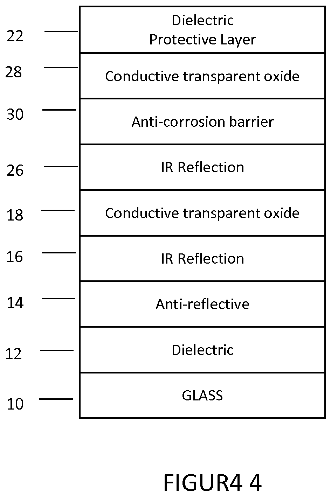

Figure 4 shows the schematic diagram of a coating with two overlapping structures formed by a first layer of an anti-reflective transparent dielectric material and a second layer of a functional metallic film with reflection properties in the infrared range, according to a fourth embodiment of the present invention;

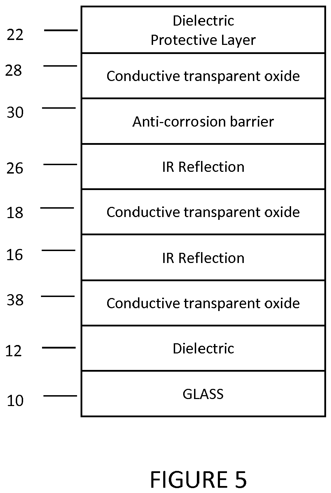

Figure 5 shows the schematic diagram of a coating with two overlapping structures formed by a first layer of an anti-reflective transparent dielectric material and a second layer of a functional metallic film with reflection properties in the infrared range, according to a fifth embodiment of the present invention;

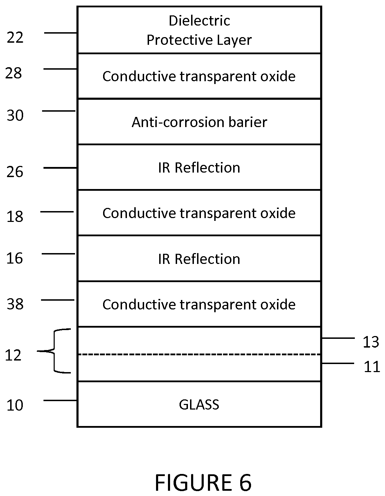

Figure 6 shows the schematic diagram of a coating with two overlapping structures formed by a first layer of an anti-reflective transparent dielectric material and a second layer of a functional metallic film with reflection properties in the infrared range, according to a sixth embodiment of the present invention;

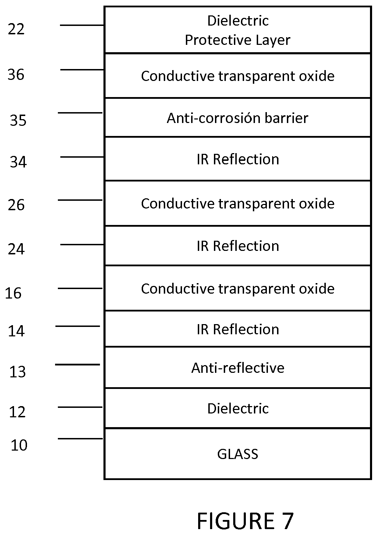

Figure 7 shows the schematic diagram of a coating with three overlapping structures formed by a first layer of an anti-reflective transparent dielectric material and a second layer of a functional metallic film with reflection properties in the infrared range, according to a seventh embodiment of the present invention;

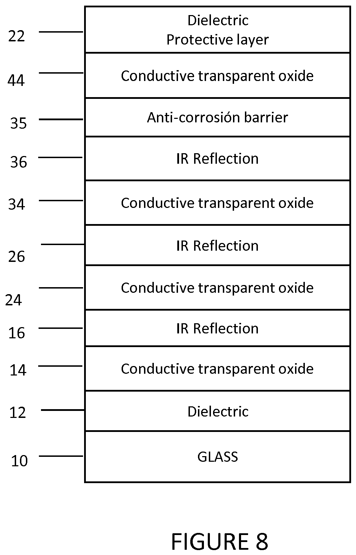

Figure 8 shows the schematic diagram of a coating with three overlapping structures formed by a first layer of an anti-reflective transparent dielectric material and a second layer of a functional metallic film with reflection properties in the infrared range, according to an eighth embodiment of the present invention;

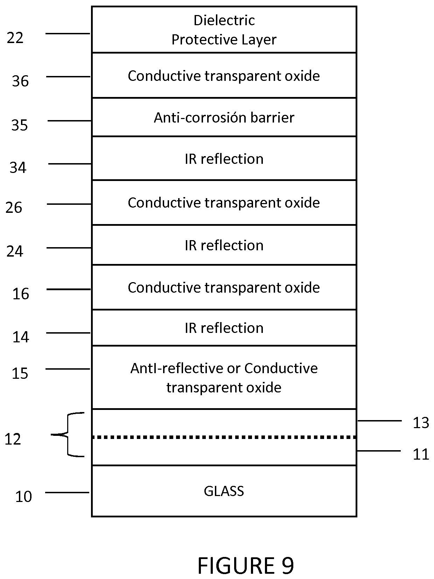

Figure 9 shows the schematic diagram of a coating with three overlapping structures formed by a first layer of an anti-reflective transparent dielectric material and a second layer of a functional metallic film with reflection properties in the infrared range, according to a ninth embodiment of the present invention;

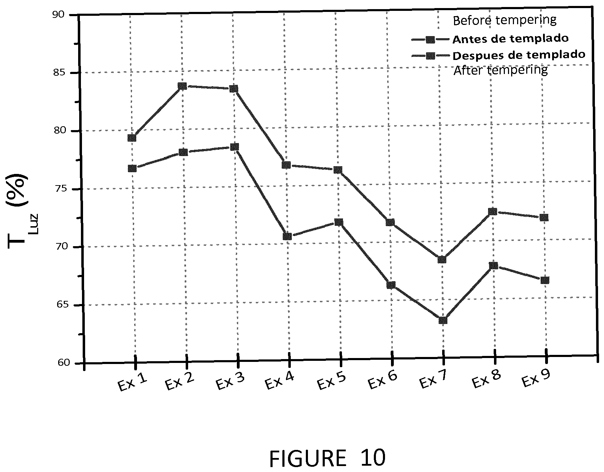

Figure 10 shows the light transmission values according to different examples of the present invention; and,

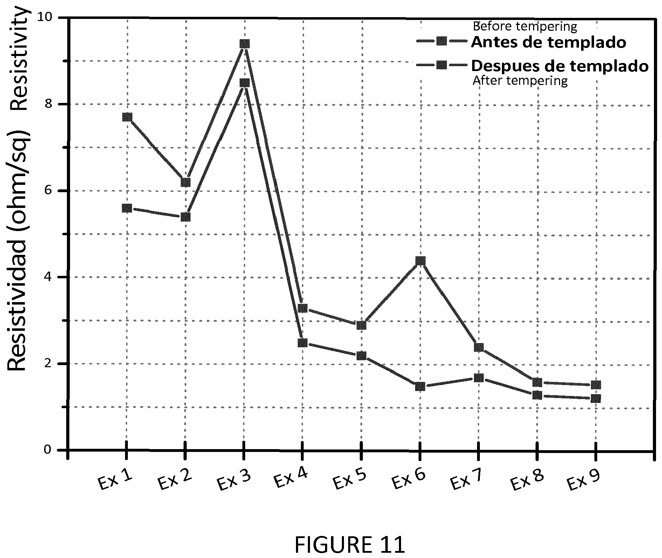

Figure 11 shows the Resistivity values according to different examples of the present invention.

### DETAILED DESCRIPTION OF THE INVENTION

### FIRST EMBODIMENT (Example 1)

In a first embodiment of the invention, a low emissivity coating deposited on a glass sheet is comprised in the following layer structure and is illustrated in Figure 1.

A first layer of anti-reflective dielectric material (12) with a refractive index between 1.65 and 1.95 is applied to a glass substrate (10). Layer one can be silicon nitride (Si₃N₄) between 10 and 40 nm thick, but preferably from 10 to 25 nm. This compound promotes the adherence of the coating to the substrate and blocks the migration of sodium from the glass.

A second coating layer (18) consists of an anti-reflective dielectric material with a refractive index between 1.32 and 1.55. Transparent dielectric materials can be used that include metallic oxides with refractive index >2.0, however, in the present invention zinc oxide (ZnO) is used, which is deposited on Si₃N₄ between 8 and 15 nm thick, and preferably between 8 and 10 nm. This layer acts as a template for the proper growth of a high reflectivity infrared (IR) energy material, as well as acting as an anti-reflective layer.

A third layer (20) corresponds to a material that provides high reflectivity in the infrared region and low absorption in the visible range. This layer is applied over the anti-reflective dielectric coating (18), between 5 and 15 nm thick, preferably from 8 to 12 nm. Noble metals such as: Al, Ag, Au, Cu and Pt are commonly used, however silver is preferred because it gives a neutral aesthetic appearance to coating.

A fourth layer consists of an absorbent material which also acts as an anti-corrosion barrier (22). In the present invention a Ni-Cr alloy is used (80:20 %p/p), because it is able to capture water vapor, oxygen, nitrogen or other compounds capable of reacting and degrading the metallic silver layer. Its primary function is to protect silver from oxidation and corrosion during upper layer deposition and/or glass tempering process. Some embodiments of the present invention prefer the barrier layer to be partially oxidized (NiCrOx) to increase the visible transmission in the coating. The barrier layer (22) ranges between 0.5 and 5 nm thick, preferably between 0.5 and 2 nm.

A fifth layer of an anti-reflective dielectric material (24) with a refractive index between 1.32 and 1.55, such as ZnO. The thickness of this anti-reflective layer (24) is between 8 and 15 nm, preferably between 10 and 12 nm. Some examples of this invention show that zinc oxide has a double function in the coating. If applied before the silver layer, ZnO acts as a nucleating agent to achieve the proper growth of the layer, provided that wurtzite type ZnO films with a texture oriented towards c-axis, are obtained. On the other hand, if placed after the reflective layer, the ZnO acts as a blocking and non-absorbent layer, which also helps maintaining the electrical conductivity of Ag, due to its electronic nature.

Finally, in this embodiment, a dielectric material is placed as a protective layer (26). This layer provides mechanical stability, thermal stability, chemical durability and scratch resistance to the entire coating. Materials such as: Si₃N₄, ZrO₂, ZrSiO₂, etc. can be used. This invention uses Si₃N₄ as a protection layer (26), a thickness between 10 and 50 nm, preferably between 20 and 45 nm.

### SECOND EMBODIMENT (Example 2)

In a second embodiment of this invention, a low emissivity coating composed of an arrangement of layers is proposed as shown in Figure 2.

On a glass substrate (10) a first dielectric layer (12) composed of a first pre-layer (14) with a refractive index between 1.65 and 1.95 is deposited, on which a second sub-layer (16) of a refractive index between 2.1 and 2.5 is deposited. In this embodiment, the first pre-layer (14) is formed by silicon nitride (Si₃N₄), between 10 and 40 nm thick, preferably between 10 and 25 nm, while the additional second sub-layer (16) is 1 to 10 nm thick and corresponds to an anti-reflective compound with a refractive index higher than 2, e.g. titanium dioxide (TiOz).

A second layer consists of an anti-reflective dielectric material (18) with a refractive index between 1.32 and 1.55. Transparent dielectric materials can be used that include metallic oxides with refractive index >2.0, however, in the present invention zinc oxide (ZnO) is used, which is deposited on Si₃N₄ between 8 and 15 nm thick, preferably from 8 to 10 nm. In addition to increasing the anti-reflective characteristics of the coating, it acts as a template for the proper growth of a high reflectivity (IR) infrared energy material.

A third layer corresponds to a material that provides high reflectivity in the infrared region and low absorption in the visible range (20). This layer is applied over the anti-reflective dielectric coating (18), between 5 and 15 nm thick, preferably from 8 to 10 nm. Noble metals such as: Al, Ag, Au, Cu and Pt are commonly used, however silver is preferred because it gives a neutral aesthetic appearance to coating.

A fourth layer consists of an absorbent material which also acts as an anti-corrosion barrier (22). In the present invention a Ni-Cr alloy is used (80:20 %p/p), because it is able to capture water vapor, oxygen, nitrogen or other compounds capable of reacting and degrading the metallic silver layer. Its primary function is to protect silver from oxidation and corrosion during upper layer deposition and/or glass tempering process. Some embodiments of the present invention prefer the barrier layer to be partially oxidized (NiCrOx) to increase the visible transmission in the coating. The barrier layer thickness (22) ranges is between 0.5 and 5 nm, preferably between 0.5 and 2 nm.

A fifth layer of the coating consists of an anti-reflective dielectric material (24) with a refractive index between 1.32 and 1.55, such as ZnO. However, some examples of this invention, SnO₂ (refractive index 2.0) can be used instead of ZnO. The thickness of this anti-reflective dielectric layer (24) is between 8 and 15 nm, preferably between 10 and 12 nm.

Finally, in this embodiment, a dielectric material is placed as a protective layer (26). This layer provides mechanical stability, thermal stability, chemical durability and scratch resistance to the entire coating. Materials such as: Si₃N₄, ZrO₂, ZrSiO₂, etc. can be used. This invention uses Si₃N₄ as a protection layer (26), between 10 and 50 nm thick, preferably between 20 and 45 nm.

### THIRD EMBODIMENT (Example 3)

In a third embodiment of this invention, a low emissivity coating is proposed consisting of a layer arrangement as shown in Figure 3.

On a glass substrate (10) a first dielectric layer (12) composed of a first pre-layer (14) with a refractive index between 1.65 and 1.95 is deposited, on which a second sub-layer (16) of a refractive index between 2.1 and 2.5 is deposited. In this embodiment, the first pre-layer (14) is formed by silicon nitride (Si₃N₄), between 10 and 40 nm thick, preferably between 10 and 25 nm, while the second sub-layer (16) is 1 to 10 nm thick and corresponds to an anti-reflective compound with a refractive index higher than 2, e.g. titanium dioxide (TiO₂).

A second layer of the coating (28) consists of a conductive transparent oxide such as aluminum-doped Zinc Oxide (AZO), between 8 and 20 nm thick, preferably between 8 and 10 nm. Inclusion of this layer in the multilayer heterostructure increases transmission (Tiuz) and reduces light reflection (R_{luz}), improves chemical stability and mechanical strength. This second layer (28) also has electrical resistance characteristics compared to ITO (3x10⁻³ Ω.cm), which promote electrical conductivity on the coated glass surface.

A third layer (20) corresponds to a material that provides high reflectivity in the infrared region and low absorption in the visible range. This layer is applied over the conductive transparent oxide (28), between 5 and 15 nm thick, preferably between 8 and 10 nm. The use of silver (Ag) is preferred in all examples of this invention because it gives a neutral tone to the coating.

A fourth layer (22) consists of an absorbent material that acts as a protective barrier to prevent the oxidation and corrosion of metallic silver during deposition of upper layers and/or glass tempering process. For this purpose, a Ni-Cr alloy (80:20 %p/p) is used, however, some examples shown prefer the barrier layer to be partially oxidized (NiCrOx), as this increases the transmission of visible light in the coating. The barrier layer thickness (22) ranges between 0.5 and 5 nm, preferably between 0.5 and 2 nm.

A fifth layer (38) of the coating corresponds to a second conductive transparent oxide film, such as AZO. The thickness of this layer (38) is between 8 and 20 nm, preferably between 8 and 15 nm.

Finally, in this embodiment, a dielectric material is placed as a protective layer (26). This layer provides mechanical stability, thermal stability, chemical durability and scratch resistance to the entire coating. Materials such as: Si₃N₄, ZrO₂, ZrSiO₂, etc. can be used. This invention uses Si₃N₄ as a protection layer (26), between 10 and 40 nm thick, preferably between 20 and 45 nm.

### FOURTH EMBODIMENT (Example 4)

In a fourth embodiment of this invention, a low emissivity coating is proposed containing within its structure two functional infrared reflective layers, as shown in Figure 4.

A first dielectric layer (12) is deposited on a glass substrate (10). Silicon nitride (Si₃N₄) can be used between 10 and 40 nm thickness, preferably between 10 and 35 nm. A second layer (14) consists of a metallic oxide with anti-reflective properties such as zinc oxide, between 8 and 20 nm thick, preferably between 8 and 10 nm. A third layer (16) of the coating provides the properties of high reflectivity in the infrared region of the electromagnetic spectrum, characteristics of a low thermal emissivity coating. All examples of this invention use metallic silver as a functional layer, between 5 and 15 nm thick, preferably between 8 and 10 nm, as it provides a neutral tone to the coating. Subsequently, a conductive transparent oxide (18) is applied as a fourth layer, between 50 and 90 nm thick, preferably between 70 and 90 nm. The use of aluminum-doped zinc oxide (AZO) is preferred in this layer because its inclusion enriches the optical, mechanical and conductive properties of coated glass. A fifth layer corresponds to a second functional silver film (26) with high infrared reflectance and 5 to 15 nm thick, preferably between 10 and 15 nm. A sixth layer (30) consists of an absorbent material that acts as a protective barrier and prevents oxidation of metallic silver during deposition of upper layers and/or glass tempering process. For this purpose, a Ni-Cr alloy (80:20 %p/p) is used, however, some examples prefer the barrier layer to be partially oxidized (NiCrOx), as this increases the transmission of visible light. The barrier layer thickness (30) ranges between 0.5 and 5 nm, preferably between 1 and 3 nm. A seventh layer (28) corresponds to a second film of aluminum-doped zinc oxide (AZO), is 8 and 30 nm thick, preferably between 8 and 20 nm which increases the coating properties. Finally, in this mode, a dielectric material is placed as a protective layer (22). This layer provides mechanical stability, thermal stability, chemical durability and scratch resistance to the entire coating. Materials such as: Si₃N₄, ZrO₂, ZrSiO₂, etc. can be used. This invention uses Si₃N₄ as a protection layer (22), 10 and 40 nm thick, however, 10 and 25 nm is preferred.

### FIFTH EMBODIMENT (Example 5)

In a fifth embodiment of this invention, a low emissivity coating includes within its structure two functional infrared reflective layers deposited between films as shown in figure 5.

A first dielectric layer (12) is deposited on a glass substrate (10), preferably silicon nitride (Si₃N₄), with a thickness between 10 and 40 nm, preferably between 10 and 35 nm.

A transparent metal oxide with conductive properties is deposited as a second layer (38) with 8 to 20 nm thick, preferably between 8 and 10 nm. Specifically, in the present invention, aluminum-doped zinc oxide (AZO) is used because this improves light transmission and reflection, chemical stability and mechanical resistance of coated glasses exposed to extreme environmental conditions.

A functional layer (16) corresponds to the third layer of the coating, which provides the characteristics of low thermal emissivity. All examples use metallic silver, between 5 and 15 nm thick, preferably between 8 and 10 nm.

A fourth layer consists of a second film of conductive transparent oxide (18), with a thickness between 50 and 90 nm, preferably between 70 and 90 nm. aluminum-doped zinc oxide (AZO) is preferentially used because this is a low cost material and also enriches the electrical conductivity properties of coated glass.

As a fifth layer, a second metallic silver film (26) is deposited with a thickness between 5 to 15 nm, preferably between 10 and 15 nm, in order to achieve a lower thermal emissivity in the coating.

A sixth layer (30) has the function of acting as a barrier to prevent oxidation of silver. In this case a Ni-Cr alloy is used (80:20 %p/p) with a thickness of 0.5 to 5 nm, preferably between 1 and 3 nm. However, some examples of this invention prefer this layer is partially oxidized (NiCrOx) in order to increase the transmission of visible light.

The penultimate layer (28) of the coating corresponds to a third film of aluminum-doped zinc oxide (AZO), with a thickness between 8 to 30 nm, preferably between 8 and 20 nm. Finally, in this embodiment, a dielectric material is placed as a protection layer (60) to provide mechanical stability, thermal stability and chemical durability to the entire coating. This invention uses Si₃N₄ as a protection layer (22), with a thickness between 10 to 40 nm, however, 10 and 25 nm is preferred.

### SIXTH EMBODIMENT (Example 6)

In the sixth embodiment of the present invention it consists of arranging layers with low emissivity properties including within their structure two reflective infrared layers deposited between films, as shown in figure 6.

On a glass substrate (10) a first dielectric layer (12) composed of a first pre-layer (11) with a refractive index between 12 and 1.95 is deposited, on which a second sub-layer (13) of a refractive index between 2.1 and 2.5 is deposited. In this embodiment, first pre-layer (11) is formed by silicon nitride (Si₃N₄), within a thickness of 10 to 40 nm, preferably between 10 and 25 nm, while the second sub-layer (13) of a thickness between 1 to 10 nm and corresponds to an anti-reflective compound with a higher refractive index, e.g. titanium dioxide (TiO₂).

A transparent metal oxide (38) with conductive properties is deposited as a second layer between 8 to 20 nm thick, preferably between 8 and 10 nm. Specifically, in the present invention, aluminum-doped zinc oxide (AZO) is used because this improves light transmission and reflection, chemical stability and mechanical resistance of coated glasses exposed to extreme environmental conditions.

The functional layer (16) is the third layer of the coating, which provides the characteristics of low thermal emissivity. All examples use metallic silver, between 5 to 15 nm thick, preferably between 8 and 10 nm.

A fourth layer (18) consists of a second film of conductive transparent oxide, with a thickness between 50 and 90 nm, preferably between 70 and 90 nm. Aluminum-doped Zinc Oxide (AZO) is preferably used because this is a low cost material and increases electrical conductivity in coated glass.

As a fifth layer, a second metallic silver film (26) is deposited within a thickness between a 5 to 15 nm, preferably between 10 and 15 nm, in order to achieve a lower thermal emissivity in the coating.

A sixth layer (30) has the function of acting as a barrier to prevent oxidation of silver. A Ni-Cr alloy is used (80:20 %p/p) in this case 0.5 to 5 nm thick, preferably between 0.5 and 2 nm. However, some examples of this invention prefer this layer is partially oxidized (NiCrOx) in order to increase the transmission of visible light.

A penultimate layer of the coating corresponds to a third film of aluminum-doped zinc oxide (AZO) (28), with a thickness between 8 to 30 nm, preferably between 8 and 20 nm. Finally, in this embodiment, a dielectric material is placed as a protection layer (60) to provide mechanical stability, thermal stability and chemical durability to the entire coating. This invention uses Si₃N₄ as the protection layer (22), with a thickness between 10 to 40 nm, however, 10 and 25 nm is preferred.

### SEVENTH EMBODIMENT (Example 7)

As a seven embodiment of this invention, a low emissivity coating is proposed containing within its structure three functional infrared reflective layers, as shown in Figure 7.

A first dielectric layer (12) of silicon nitride (Si₃N₄) is deposited on a glass substrate (10), within a thickness between10 and 40 nm, preferably between 30 and 40 nm. A second layer (13) consists of a metallic oxide with anti-reflective properties such as zinc oxide, with a thickness between 8 and 20 nm, preferably between 8 and 15 nm. A third layer (14) of the coating provides the characteristic properties of a low emissivity coating such as a high reflectivity of infrared radiation. All of the examples described metallic silver is used as a functional layer, which is deposited with a thickness between 5 and 15 nm, preferably between 10 and 15 nm. A fourth layer (16) is applied as a transparent conductive oxide within a thickness between 50 and 90 nm, preferably between 70 and 80 nm, because the optical, mechanical and conductive properties of coated glass are enriched. In this invention, the layer is composed of aluminum-doped zinc oxide.

A fifth layer (24) corresponds to a second functional silver layer with high infrared reflectance and with a thickness between 5 and 15 nm, preferably between 10 and 15 nm. A sixth layer (26) consists of a second layer of conductive transparent oxide such as AZO, with a thickness between 50 and 90 nm, preferably between 70 and 80 nm. A seventh layer (34) corresponds to a third layer of metallic silver with a thickness between 5 and 15 nm, preferably between 10 and 15 nm, which increases the reflection of infrared radiation and decreases the emissivity of the final product.

As an eight layer, an absorbent material (35) is deposited which acts as a protective barrier, in these examples a Ni-Cr alloy is used (80:20 %p/p), with a thickness between 0.5 and 5 nm, or preferably between 0.5 and 2 nm. This material prevents oxidation of the metallic silver during the deposition of the upper layers and/or the glass tempering process. To increase visible light transmission, the barrier layer should be partially oxidized (NiCrOx).

A ninth layer (36) corresponds to a fourth layer of aluminum-doped zinc oxide (AZO) with a thickness between 20 and 40 nm, preferably between 20 and 30 nm which increases the coating properties. Finally, a tenth layer (22) consists of a dielectric material that provides mechanical stability, thermal stability, chemical durability and scratch resistance to the entire coating. As a protection layer (22), materials such as Si₃N₄, ZrO₂, ZrSiO₂, etc. can be used, however, in the present invention Si₃N₄ is used with a thickness between 10 and 40 nm, preferably between 10 and 25 nm.

### EIGHT EMBODIMENT (Example 8)

As an eight embodiment of this invention, a low emissivity coating is proposed containing within its structure three functional infrared reflective layers, as shown in Figure 8.

A first dielectric layer (12) of silicon nitride (Si₃N₄) is deposited on a glass substrate (10), with a thickness between 10 and 40 nm, preferably between 30 and 40 nm. Starting from previous embodiment (seven), where the second layer (13) consists of ZnO, in this embodiment, this material is replaced by a conductive transparent oxide that increases optical properties, as well as mechanical stability and electrical conductivity of coated glass. In the present invention the layer (14) is composed of aluminum-doped zinc oxide layer (AZO), which is deposited with a thickness between 8 and 20 nm, preferably between 8 and 15 nm. The remaining coating remains the same configuration and composition.

### NINTH EMBODIMENT (Example 9)

The ninth embodiment of the present invention comprises a low emissivity coating deposited on a glass substrate. The coating contains within its structure three functional infrared reflective layers, as shown in Figure 9.

A first dielectric layer (12) is deposited on a glass substrate (10), consisting of a first pre-layer (11) of silicon nitride (Si₃N₄), at a thickness between 10 and 40 nm, preferably between 30 and 40 nm, and a second sub-layer (13) of an anti-reflective dielectric material such as TiO₂, deposited with a thickness of 1 to 10 nm. A second layer (15) consists of an anti-reflective material (ZnO) or a conductive transparent oxide (AZO), which help to achieve proper silver growth and increase the coating's optical properties. This second layer (15) has a thickness between 8 and 20 nm, preferably between 8 and 15 nm

A third layer (14) includes a silver metallic layer at a thickness between 5 and 15 nm, preferably between 10 and 15 nm, which acts as an optical filter and reflects most of the infrared radiation. A fourth layer (16) is a transparent conductive oxide which is applied with a thickness between 50 and 90 nm, preferably between 70 and 80 nm, because the optical, mechanical and conductive properties of coated glass are enriched. This invention uses aluminum-doped zinc oxide (AZO).

A fifth layer (24) corresponds to a second functional silver layer with high infrared reflectance and a thickness of 5 and 15 nm, preferably between 10 and 15 nm. A sixth layer (26) consists of a layer of conductive transparent oxide such as AZO, at a thickness of 50 and 90 nm, preferably between 70 and 80 nm. A seventh layer (34) corresponds to a third layer of metallic silver at a thickness between 5 and 15 nm, preferably between 10 and 15 nm which increases the reflection of infrared radiation and decreases the emissivity of the final product.

As an eighth layer (35) an absorbent material which acts as a protective barrier is deposited, in these examples a Ni-Cr (80:20 %p/p) alloy is used at a thickness of 0.5 and 5 nm, preferably between 0.5 and 2 nm. This material prevents oxidation of the metallic silver during the deposition of the upper layers and/or the glass tempering process. To increase visible light transmission, the barrier layer should be partially oxidized (NiCrOx).

A ninth layer (36) corresponds to a fourth layer of aluminum-doped zinc oxide (AZO), with a thickness between 20 and 40 nm, preferably between 20 and 30 nm, which increases the coating properties. Finally, a tenth layer (22) consists of a dielectric material that provides mechanical stability, thermal stability, chemical durability and scratch resistance to the entire coating. As a protective layer (22) Si₃N₄ is used at a thickness between 10 and 40 nm, preferably between 10 and 25 nm.

On the basis of the examples described above, Table 1 shows the configuration, composition and thickness of the layers composing the above coatings.

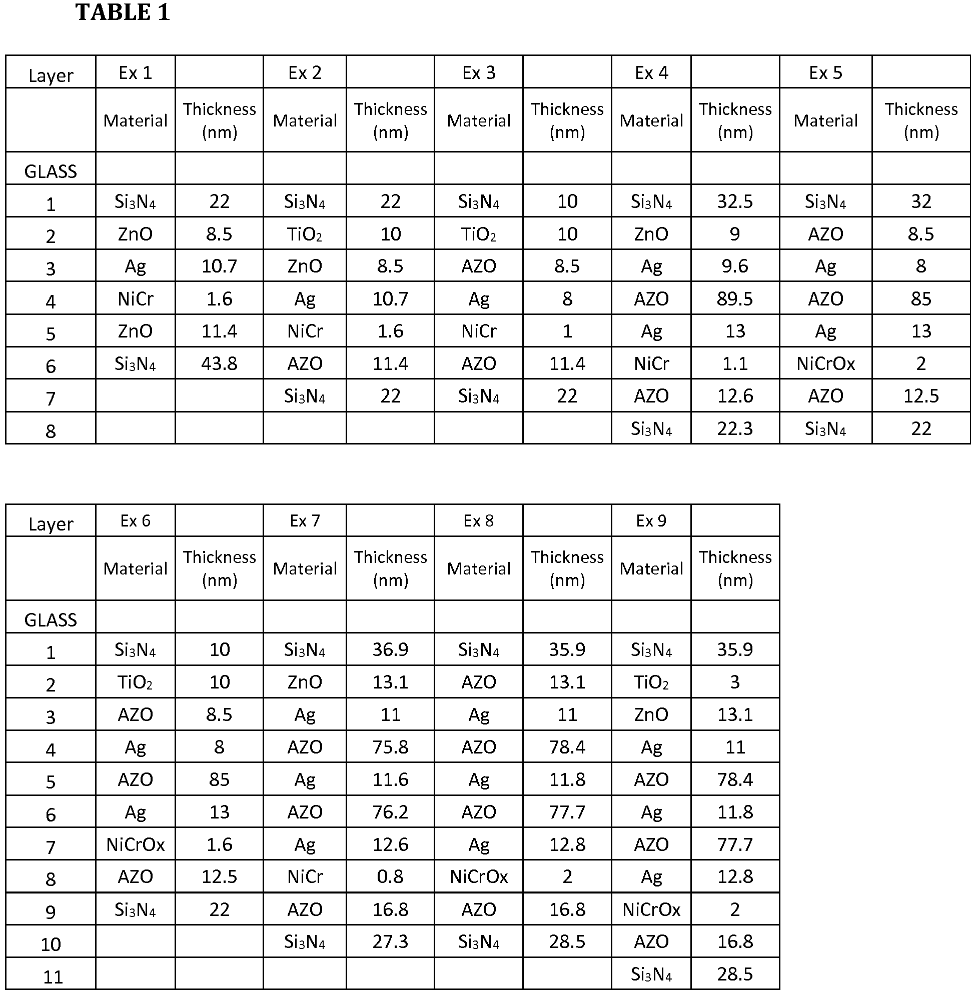

Table 2 summarizes the calculated values for the main optical and color properties, before and after heat treating the products at 600°C for 10 minutes.

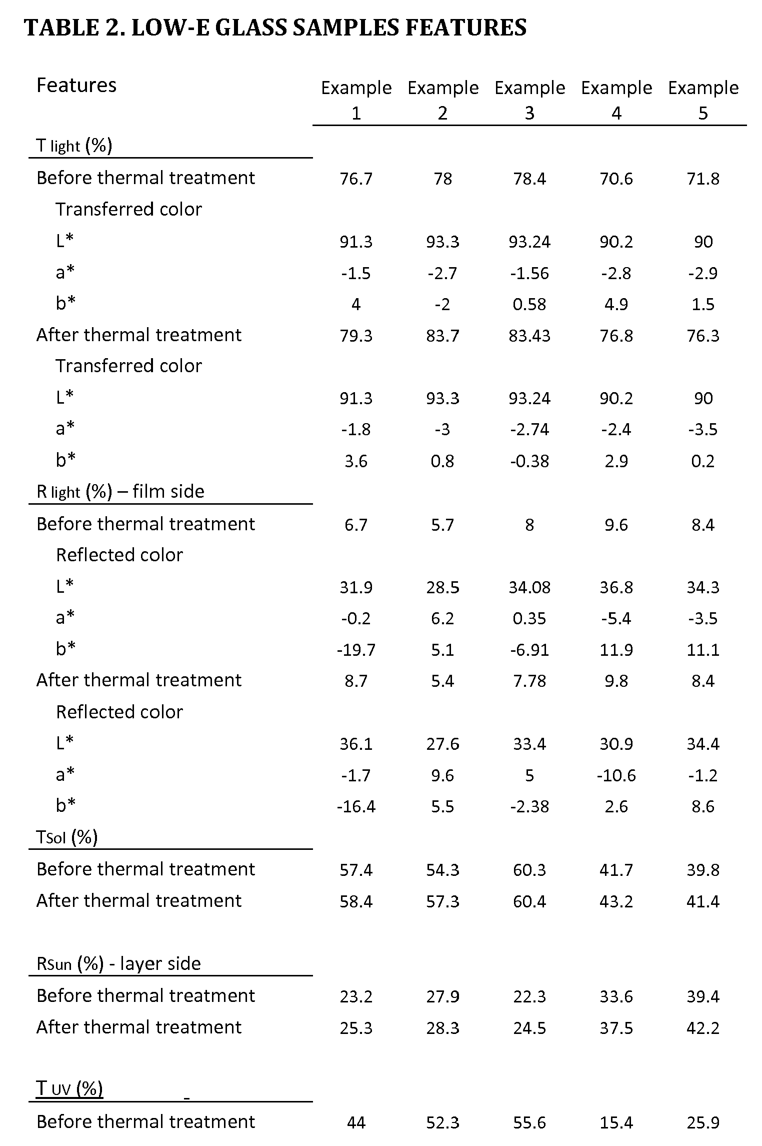

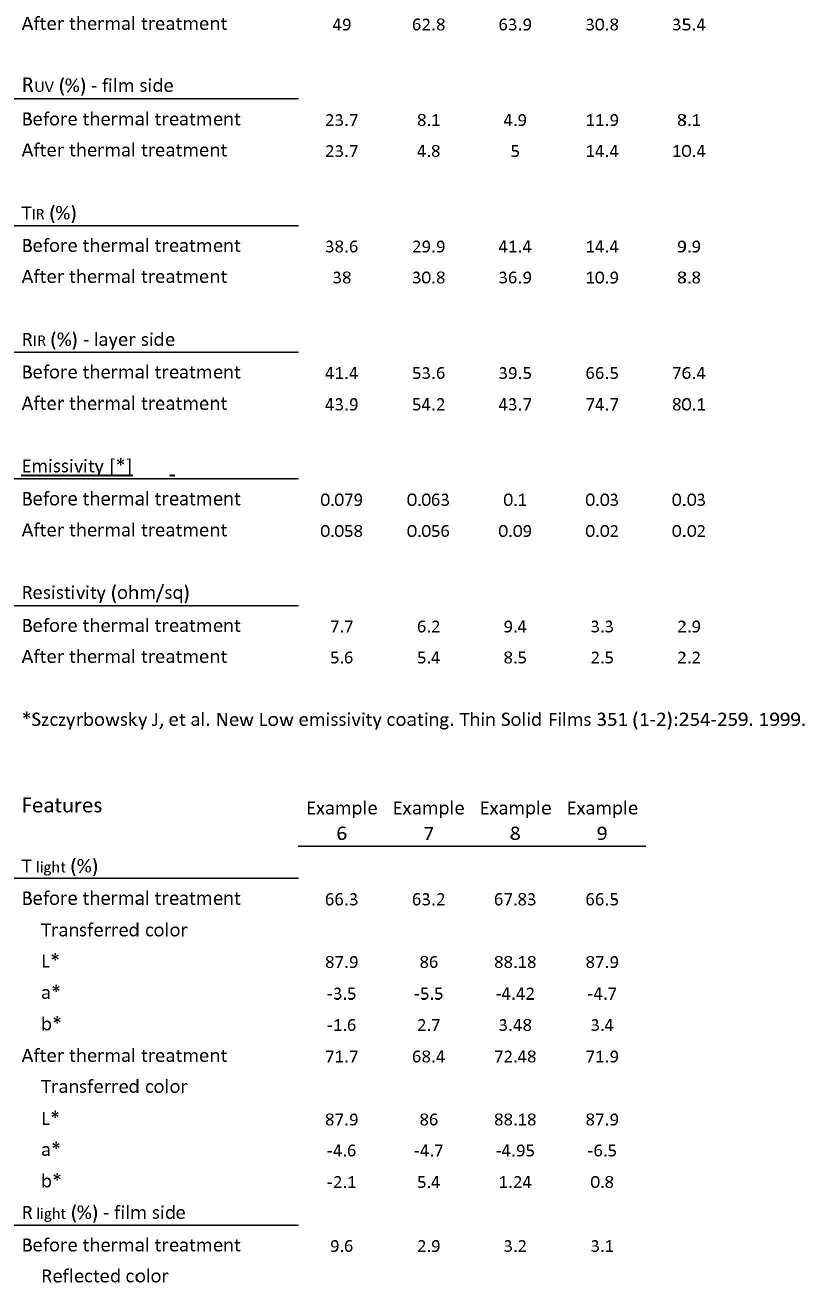

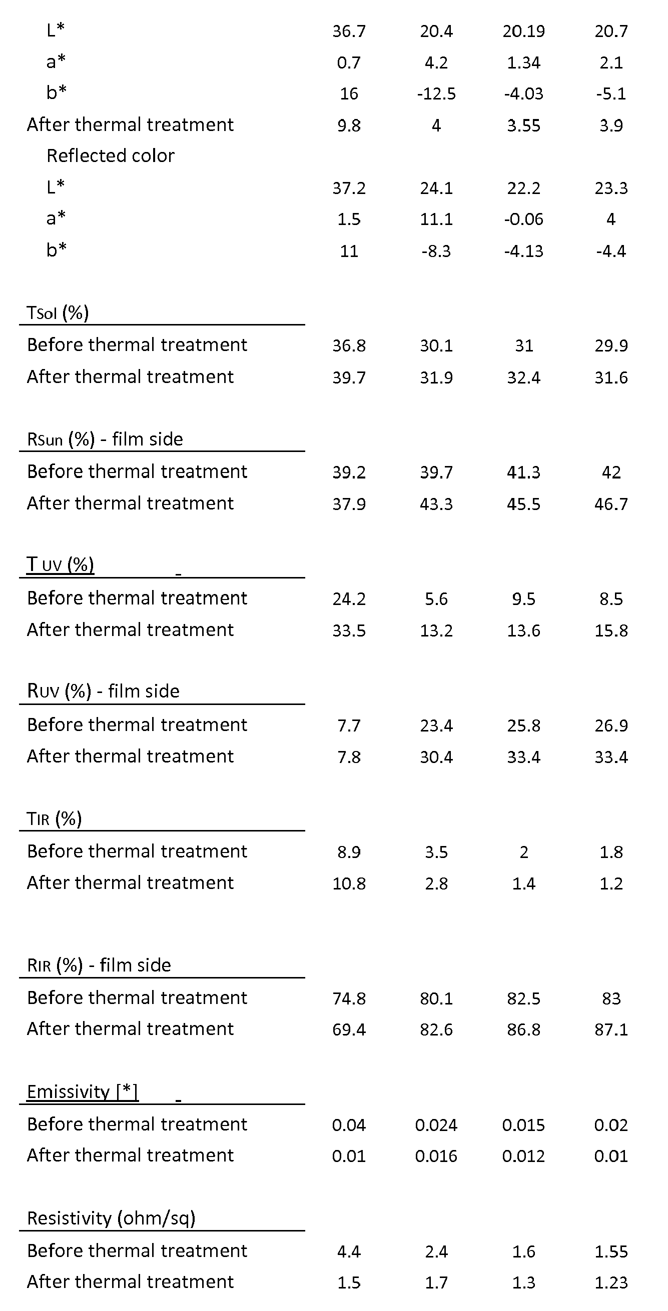

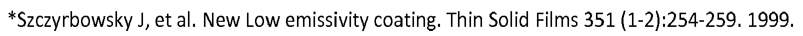

On the other hand, figures 10 and 11 show the behavior of light transmission and solar transmission in different examples, respectively. As shown, both characteristics increase up to 2% after heat treatment. A reduction in the coating resistivity value of up to one unit is also observed, indicating an improvement in the electrical conductivity properties of the coating. Additionally, the found values reveal that the described configurations have chemical and thermal stability, avoiding the migration of sodium ion from the substrate, the oxidation of silver during the thermal treatment and the possible interpenetration of the layers due to atomic diffusion and temperature.

Therefore, it is feasible to apply the products shown in double or triple window systems (annealed, semi-tempered and tempered) aimed at the architectural market, as well as in flat and/or curved laminated glazed systems, with views in residential, architectural and automotive applications.

This invention is not limited to the examples shown. Likewise, the coatings described were deposited on clear glass; however, they can be applied on glasses of different chemical composition, shade (gray, bronze, green, blue, etc.) or physical properties, taking into account the changes in the reported characteristics due to the effect of the substrate.

## Claims

1. A glass substrate provided with a stack of thin coating layers which comprises:
A first layer of an anti-reflective dielectric material, with a refractive index between 1.65 and 2.65, located above the glass substrate;
At least a two-layer structure including: a first layer of an anti-reflective transparent dielectric material with a refractive index between 1.32 and 1.55, located in the lower position, and a second layer of a metal functional layer with reflection properties in the infrared range for the upper position, this structure being located above the first layer of anti-reflective dielectric material;
A second layer of an absorbent anti-corrosion barrier material, to protect the metal functional layer from oxidation and corrosion, this layer of absorbent material is placed over the metal functional layer of the two-layer structure during the deposition of the top layers and/or the glass tempering process;
A third layer of an anti-reflective material, this layer being selected from a metal oxide with a refractive index between 1.32 and 1.55, a metal oxide with a refractive index between 1.65 and 1.95 or an aluminum-doped zinc oxide (AZO); and,
A fourth layer of anti-reflective material protection to increase visible light transmission and scratch resistance of the substrate, showing a high visible light transmission (>60%), less than 60% solar transmission, less than 10 Ω per square and less than 0.10 emissivity.

2. The glass substrate provided with a stack of thin coating layers as claimed in claim 1, wherein the first layer of anti-reflective dielectric material being selected from the group of nitrites, metal oxides of the TiO₂ group or a combination of both.

3. The glass substrate provided with a stack of thin coating layers as claimed in claim 1, wherein the first layer of dielectric anti-reflective material comprises:
At least one selected metal oxide layer with a refractive index between 1.65 and 1.95 and a thickness between 10 and 40 nm thick, preferably between 10 to 25 nm, which is superimposed on the glass substrate.

4. The glass substrate provided with a stack of thin coating layers as claimed in claim 1, wherein the first layer of dielectric anti-reflective material comprises:
At least one selected metal oxide layer with a refractive index between 1.65 and 1.95 and a thickness between 10 to 40 nm, preferably between 30 to 40 nm, which is superimposed on the glass substrate.

5. The glass substrate provided with a stack of thin coating layers as claimed in claim 1, wherein the first layer of the anti-reflective dielectric material is Silicon Nitride (Si₃N₄).

6. The glass substrate provided with a stack of thin coating layers as claimed in claim 1, wherein the first layer of dielectric anti-reflective material comprises:
a first pre-layer with a refractive index between 1.65 and 1.95 and a thickness between 10 and 40 nm, preferably between 10 and 25 nm, located above the glass substrate; and a second pre-layer, above the first pre-layer with a refractive index greater than 2 and a thickness between 1 and 10 nm.

7. The glass substrate provided with a stack of thin coating layers as claimed in claim 1, wherein the first layer of dielectric anti-reflective material comprises:
a first pre-layer with a refractive index between 1.65 and 1.95 and a thickness between 10 and 40 nm, preferably between 10 and 25 nm, located above the glass substrate; and a second pre-layer above the first pre-layer with a refractive index between 2.1 and 2.5 and a thickness between 1 and 10 nm.

8. The glass substrate provided with a stack of thin coating layers as claimed in claim 7, wherein the first pre-layer of the first dielectric anti-reflective layer is selected from Silicon Nitride (Si₃N₄).

9. The glass substrate provided with a stack of thin coating layers as claimed in claim 7, wherein the second pre-layer of the first layer of the anti-reflective dielectric material is selected from titanium, zirconium, zinc, tin and niobium oxides, silicon nitrides, chromium, zirconium or titanium.

10. The glass substrate provided with a stack of thin coating layers as claimed in claim 7, wherein the anti-reflective transparent dielectric material of the two-layer structure is a transparent metallic oxide or a conductive transparent oxide with a thickness between 8 and 20 nm, preferably between 8 and 10nm.

11. The glass substrate provided with a stack of thin coating layers as claimed in claim 10, wherein the transparent metal oxide is zinc oxide (ZnO).

12. The glass substrate provided with a stack of thin coating layers as claimed in claim 10, wherein the conductive transparent oxide is aluminum-doped zinc oxide (AZO).

13. The glass substrate provided with a stack of thin coating layers as claimed in claim 1, wherein the first layer of the anti-reflective transparent dielectric material of two-layer structure is a transparent metal oxide or conductive transparent oxide with a thickness between 8 and 20 nm, preferably between 8 and 15nm.

14. The glass substrate provided with a stack of thin coating layers as claimed in claim 13, wherein the transparent metal oxide is zinc oxide (ZnO).

15. The glass substrate provided with a stack of thin coating layers as claimed in claim 10, wherein the conductive transparent oxide is aluminum-doped zinc oxide (AZO).

16. The glass substrate provided with a stack of thin coating layers as claimed in claim 1, wherein the first layer of anti-reflective transparent dielectric material of two-layer structure is a transparent metal oxide or conductive transparent oxide with a thickness between 50 and 90 nm, preferably between 70 and 90nm.

17. The glass substrate provided with a stack of thin coating layers as claimed in claim 16, wherein the transparent metal oxide is zinc oxide (ZnO).

18. The glass substrate provided with a stack of thin coating layers as claimed in claim 16, wherein the conductive transparent oxide is aluminum-doped zinc oxide (AZO).

19. The glass substrate provided with a stack of thin coating layers as claimed in claim 1, wherein the first layer of anti-reflective transparent dielectric material of two-layer structure is a transparent metal oxide or conductive transparent oxide with a thickness between 50 and 90 nm, preferably between 70 and 80 nm.

20. The glass substrate provided with a stack of thin coating layers as claimed in claim 19, wherein the transparent metal oxide is zinc oxide (ZnO).

21. The glass substrate provided with a stack of thin coating layers as claimed in claim 19, wherein the conductive transparent oxide is aluminum-doped zinc oxide (AZO).

22. The glass substrate provided with a stack of thin coating layers as claimed in claim 1, wherein functional metal layer in the structure is a noble metal selected from Al, Ag, Au, Cu or Pt with a thickness between 5 and 15 nm, preferably between 8 and 10 nm.

23. The glass substrate provided with a stack of thin coating layers as claimed in claim 1, wherein the functional metal layer of the structure is a noble metal selected from Al, Ag, Au, Cu or Pt with a thickness between 5 and 15 nm, preferably between 10 and 15 nm.

24. The glass substrate provided with a stack of thin coating layers as claimed in claim 1, wherein the second layer of an absorbent material is a Ni-Cr alloy (80:20 %p/p) or a nickel-chrome alloy oxide (NiCrOx), the second layer having a thickness between 0.5 and 5 nm, preferably selected between 0.5 and 2 nm or between 1 and 3 nm.

25. The glass substrate provided with a stack of thin coating layers as claimed in claim 1, wherein the third layer of the anti-reflective material is ZnO, SnO₂ or a transparent semiconductor oxide, the third layer having a thickness between 8 and 15 nm, preferably between 10 and 12 nm.

26. The glass substrate provided with a stack of thin coating layers as claimed in claim 1, wherein the third layer of anti-reflective material is ZnO, SnO₂ or a transparent semiconductor oxide, the third layer having a thickness between 8 and 20 nm, preferably between 8 and 15 nm.

27. The glass substrate provided with a stack of thin coating layers as claimed in claim 1, wherein the third layer of the anti-reflective material is ZnO, SnO₂ or a transparent semiconductor oxide, the third layer having a thickness between 8 and 30 nm, preferably between 8 and 20 nm.

28. The glass substrate provided with a stack of thin coating layers as claimed in claim 1, wherein the third layer of the anti-reflective material is ZnO, SnO₂ or a transparent semiconductor oxide, the third layer having a thickness between 20 and 40 nm, preferably between 20 and 30 nm.

29. The glass substrate provided with a stack of thin coating layers as claimed in claim 1, wherein the fourth layer of protection is an anti-reflective material of the group of nitrides, oxides or silicates of zirconium or silicon, the anti-reflective material having a thickness between 10 and 50 nm, preferably between 20 and 45 nm.

30. The glass substrate provided with a stack of thin coating layers as claimed in claim 1, wherein the fourth layer of protection is an anti-reflective material of the nitrides, oxides or silicates of zirconium or silicon group, the fourth layer having a thickness between 8 and 20 nm, preferably between 8 and 15 nm.

31. The glass substrate provided with a stack of thin coating layers as claimed in claim 1, wherein the fourth layer of protection is an anti-reflective material of the nitrides, oxides or silicates of zirconium or silicon group, the fourth layer having a thickness between 10 and 40 nm, preferably between 10 and 25 nm.

32. The glass substrate provided with a stack of thin coating layers as claimed in claim 1, which comprises the following structure:
Glass substrate/Si₃N₄/ZnO/Ag/NiCr/ZnO/Si₃N₄ o ZrO₂ o ZrSiO₂

33. The glass substrate provided with a stack of thin coating layers as claimed in claim 1, which comprises the following structure:
Glass substrate /Si₃N₄/TiO₂/ZnO/Ag/NiCr o NiCrOx/AZO/Si₃N₄

34. The glass substrate provided with a stack of thin coating layers as claimed in claim 1, which comprises the following structure:
Glass substrate /Si₃N₄/TiO₂/AZO/Ag/NiCr o NiCrOx/AZO/Si₃N₄

35. The glass substrate provided with a stack of thin coating layers as claimed in claim 1, which comprises the following structure:
Glass substrate /Si₃N₄/ZnO/Ag/AZO/Ag/NiCr o NiCrOx/AZO/Si₃N₄

36. The glass substrate provided with a stack of thin coating layers as claimed in claim 1, which comprises the following structure:
Glass substrate /Si₃N₄/AZO/Ag/AZO/Ag/NiCr o NiCrOx/ AZO/Si₃N₄

37. The glass substrate provided with a stack of thin coating layers as claimed in claim 1, which comprises the following structure:
Glass substrate /Si₃N₄/TiO_{2/}AZO/Ag/AZO/Ag/NiCr o NiCrOx/AZO/Si₃N₄

38. The glass substrate provided with a stack of thin coating layers as claimed in claim 1, which comprises the following structure:
Glass substrate /Si₃N₄/ZnO/Ag/AZO/Ag/AZO/Ag/NiCrOx/AZO/Si₃N₄

39. The glass substrate provided with a stack of thin coating layers as claimed in claim 1, which comprises the following structure:
Glass substrate /Si₃N_{4/}AZO/Ag/AZO/Ag/AZO/Ag/NiCrOx/AZO/Si₃N₄

40. The glass substrate provided with a stack of thin coating layers as claimed in claim 1, which comprises the following structure:
Glass substrate /Si₃N₄/TiO₂/ZnO/Ag/AZO/Ag/AZO/Ag/NiCrOx/AZO/Si₃N₄

41. The glass substrate provided with a stack of thin coating layers as claimed in claim 1, wherein the thicknesses of the two-layer structure with the following sequence: ZnO or AZO/Ag are 8 to 15 nm/5 to 15 nm.

42. The glass substrate provided with a stack of thin coating layers as claimed in claim 1, wherein the thicknesses of two two-layer structures with the following sequence: ZnO or AZO/Ag/AZO are 8 to 15 nm/ 5 to 15 nm/ 50 to 90 nm/ 5 to 15 nm.

43. The glass substrate provided with a stack of thin coating layers as claimed in claim 1, wherein the thicknesses of three two-layer structures with the following sequence: ZnO or AZO/Ag /AZO/Ag/AZO/Ag/Ag/AZO are 8 to 20 nm/ 5 to 15 nm/ 50 to 90 nm/ 5 to 15 nm/ 50 to 90 nm/ 5 to 15 nm.
